# FASCICULE DE BREVET EUROPEEN

(11) **EP 0 370 915 B1**
(45) Date de publication et mention de la délivrance du brevet: **23.03.1994**
(21) Numéro de dépôt: 89403244.0
(22) Date de dépôt: 23.11.1989
(51) Int. Cl.: H04B 7/26, G08G 1/09, H01Q 3/26

(54) **Dispositif et système de radiodiffusion isofréquence à interférences atténuées**
Vorrichtung und System für Gleichfrequenzfunk mit verringerten Interferenzen
Device and system for isofrequencial broadcasting with reduced interfrequencies

(30) Priorité: 23.11.1988 FR 8815254
(43) Date de publication de la demande: 30.05.1990
(73) Titulaire: COMPAGNIE FINANCIERE ET INDUSTRIELLE DES AUTOROUTES, F-75016 Paris (FR)
(72) Inventeur: Chemin, Henri L., F-75016 Paris (FR)
(74) Mandataire: Serin, Jean-Pierre

(56) Documents cités:
- GB-A- 1 505 074
- IEEE TRANSACTIONS ON VEHICULAR TECHNOLOGY, vol. VT-19, no. 1, février 1970,pages 69-73, IEEE, New York, US; F.B. WOODWORTH: "A total highwaycommunications system using F1-F1 repeaters"
- WORLD PATENTS INDEX, semaine 8744, 17 septembre 1987, Derwent Publications Ltd, Londres, GB, WO2 R48, No. 87-307065/44; & AU-A-8770041 (Antenna Signal) 17.09.1987

## Description

L'invention concerne un dispositif et un système de radiodiffusion isofréquence à interférences atténuées, plus particulièrement destiné au réseau autoroutier.

La réception des émetteurs de radiodiffusion en modulation de fréquence à bord d'un véhicule se heurte à un problème fondamental : la propagation en ligne droite des ondes radioélectriques utilisées.

La conséquence directe de cette caractéristique est que l'on ne peut plus recevoir un émetteur à partir d'une certaine distance soit en raison du relief, soit tout simplement en raison de la courbure de la surface terrestre, et aussi de l'atténuation de l'onde de sol.

De ce fait, la réception d'une station donnée de radiodiffusion ne peut plus se faire à partir d'un certain éloignement de l'émetteur. Pour pallier cet inconvénient, on dispose sur le territoire des réémetteurs ou des relais grâce auxquels un automobiliste par exemple pourra suivre une émission de radio tout au long de son trajet.

A ce stade se pose le problème des interférences.

En effet, deux émissions de même fréquence vont être reçues par le récepteur en certains points du trajet et les battements en résultant vont perturber le confort d'écoute, voire brouiller complètement l'émission en générant une modulation d'amplitude parasite, fonction du déplacement du véhicule. C'est pourquoi les différents réémetteurs ou émetteurs, fonctionnent sur des fréquences différentes.

L'inconvénient d'un tel système réside bien sûr dans le fait que l'auditeur, se déplaçant à bord de son véhicule, devra changer de fréquence dès qu'il abordera une partie du territoire où l'émetteur sur lequel il est calé ne peut plus être reçu de façon satisfaisante.

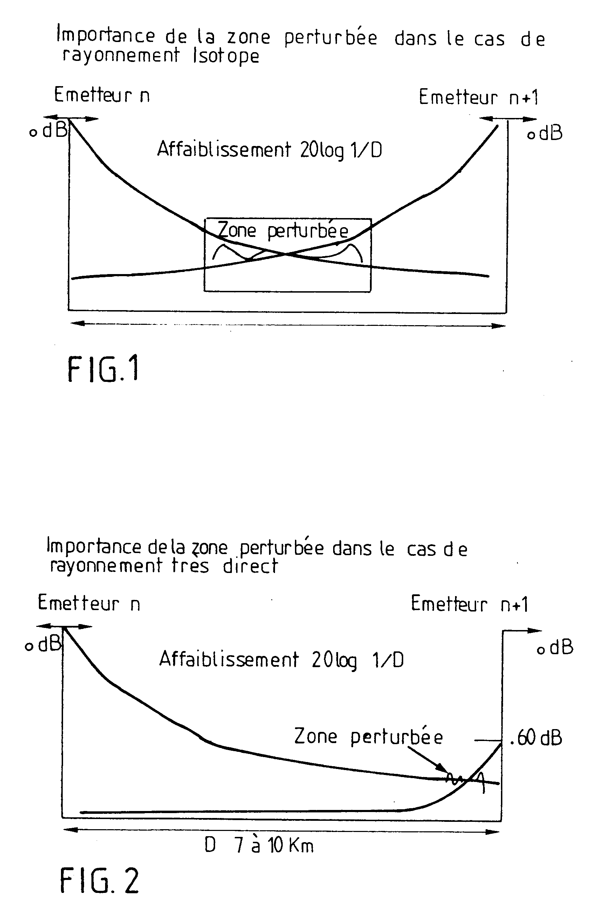

En effet, si l'on veut conserver la même fréquence pour des émetteurs de forte puissance comme ceux habituellement utilisés, l'interférence de deux émetteurs consécutifs produit alors des champs nuls séparés d'une demi-onde dans la zone où les champs sont égaux (voir Fig. 1).

Les lieux géomètriques de ces champs nuls sont des familles d'hyperboles. On utilise d'ailleurs ce phénomène dans des systèmes de radionavigation comme le LORAN, le DECA et l'OMEGA.

Pour deux émetteurs (n et n+1) à diagramme de rayonnement circulaire horizontal, distants de 10̸0̸ Km environ, la zone perturbée est de l'ordre de 50̸ Km ! Il va de soi que l'on ne peut tolérer cela dans un réseau de radiodiffusion commercial.

L'installation d'émetteurs isofréquence le long du réseau sans précaution spéciale, conduira à l'existence de zones de surfaces importante où les champs engendrés par chacun des émetteurs pourront être quasi égaux ce qui produira des zones d'amplitude quasi nulles (quasi zéro) se reproduisant périodiquement en fonction de la position des véhicules, c'est-à-dire à chaque fois que les amplitudes seront quasi égales alors que la position du véhicule sera telle que les champs seront en opposition de phase (fig. 1).

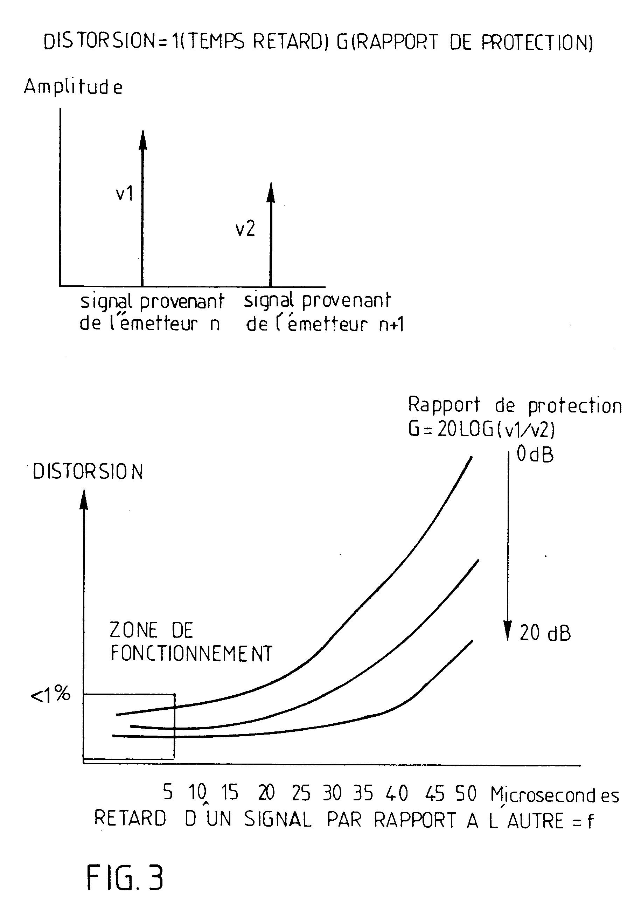

De plus, si l'on appelle "rapport de protection" le rapport entre les deux champs qui peuvent être reçus entre deux émetteurs consécutifs, et si l'un des signaux est très en retard par rapport au dernier, on obtiendra une distorsion importante au point de réception, proportionnelle au retard, et inversement proportionnelle au rapport de protection. C'est-à-dire qu'un très grand retard avec un rapport de protection élevé ne produira qu'une distorsion très acceptable. Un petit retard avec un rapport de protection faible produira une très faible perturbation (fig. 3).

On connaît par le document "IEE Transactions on vehicular technology, vol. VT-19, N^{o} 1 de Février 1970, un article de FB Woodworth décrivant un système de télécommunication pour auto route dans lequel un réseau est constitué d'un émetteur principal et de réémetteurs disposés le long de l'autoroute et pourvus d'antennes d'émission et de réception. Ce réseau assure les communications depuis et vers un véhicule circulant sur l'autoroute, véhicule équipé d'un transpondeur permettant son identification et sa localisation. Deux fréquences sont utilisées dans ce cas, la première par l'émetteur du réseau, la seconde par l'émetteur du véhicule, les 2 fréquences pouvant être écartées de quelques MHz.

Ce système est inapte à la radiodiffusion pour laquelle le confort d'écoute et la continuité de réception doivent être impérativement assurés.

En effet, pour les télécommunications, un niveau maximal de quelques dB µV/m suffit, alors que pour une radiodiffusion de qualité, il doit être d'au moins 40 dB µV/m.

Du fait de l'emploi de deux fréquences, les antennes ne peuvent être constituées ni réglées avec précision comme pour une seule fréquence. D'autre part, le problème des interférences entre deux réémetteurs voisins ne se pose pas avec la même acuité.

On connaît également par le World Patents Index du 17.09.1987 de Derwent Publication, un système dans lequel des éléments d'antennes sont décalés entre eux d'un quart de longueur d'onde (λ/4) mais ceci sans le décalage exact électrique λ/4 nécessaire. Mais le système consiste en un ensemble d'antennes bi-fréquence dans lequel on utilise les antennes de la première fréquence (VHF) pour diminuer le rayonnement arrière des éléments de la seconde fréquence (VHF).

Ce type d'antenne ne convient pas du tout pour un système de radiodiffusion uni-fréquence comportant plusieurs réémetteurs mis à la suite des autres.

L'invention vise à diminuer les inconvénients précités, en procurant un dispositif et un système permettant à la fois l'utilisation d'une seule fréquence sur un long trajet et l'atténuation des interférences de deux émissions voisines jusqu'à les rendre imperceptibles par l'auditeur à bord d'un véhicule.

Ce but est atteint grâce à l'invention en ce qu'on dispose, le long du trajet, à intervalles réduits, des émetteurs, des réémetteurs, (amplificateurs) de faible puissance, à faible temps de transit (< 5µs), placés entre des antennes de réception et d'émission, calés sur la même fréquence et synchronisés, ces antennes étant directionnelles et deux réémetteurs consécutifs étant dirigés approximativement dans la même direction, de manière à ce que le second puisse recevoir l'émission du premier et la retransmettre au suivant afin de constituer une chaîne, et en ce que des points nodaux constitués par des stations mères intermédiaires sont disposés le long du trajet entre deux séries de réémetteurs afin de garantir le fonctionnement du reste de la chaîne lorsque l'un des réémetteurs d'une série cesse de fonctionner, et pour permettre le décrochement en faveur d'émissions régionales, ces points nodaux étant alimentés par faisceau Hertzien, satellite, câble de fibres optiques ou tout autre moyen de transmission.

On réalise ainsi un réseau isofréquence où les zones de quasi zéro sont des plus réduites alors que le décalage dans le temps entre deux émissions seront également des plus réduits.

La modulation d'amplitude parasite due à l'interférence apparaissant lors du déplacement des véhicules entre deux émetteurs consécutifs et la distorsion du au décalage dans le temps des deux bandes seront donc très réduites à des valeurs des plus acceptables.

L'invention sera mieux comprise au moyen de la description ci-après d'un exemple de réalisation, à l'aide des dessins annexés sur lesquels :
La figure 1 est un diagramme montrant la largeur de zone perturbée en l'absence de l'invention;
la figure 2 montre la zone perturbée avec le système selon l'invention;
la figure 3 montre la distorsion en fonction du retard et du rapport de protection;
la figure 4 montre schématiquement le principe d'un réémetteur;
la figure 5 montre la répartition et l'orientation des émetteurs de la chaîne de radiodiffusion selon le procédé de l'invention :
la figure 6 montre le principe d'élimination des réflexions en zone proche.

Pour éviter que des émetteurs situés le long de l'auto route ne produisent des retards importants, une chaîne de réémetteurs sans démodulation et sans passage par une fréquence intermédiaire, source de retard, est utilisée.

Il s'agit d'utiliser des amplificateurs à faible retard, chacun des amplificateurs de la chaîne étant alimenté via une antenne de réception de par récepteur précédent, et d'un gain tel qu'alimentant une antenne d'émission on obtienne une puissance suffisante à desservir de 7 à 10 Km. La syntonie est assurée par des filtres à plusieurs pôles à haut coefficient de surtension et à déphasage minimal placés à l'entrée et à la sortie de l'amplificateur.

Les filtres seront d'une sélectivité suffisante pour quasiment éliminer les canaux distants de plus de 1MHz de la fréquence utilisée, les émissions trop proches de la fréquence utilisée étant par ailleurs pratiquement éliminées, si nécessaire, en employant un groupement d'antennes présentant un ou plusieurs zéro dans les directions de ces émissions non désirées.

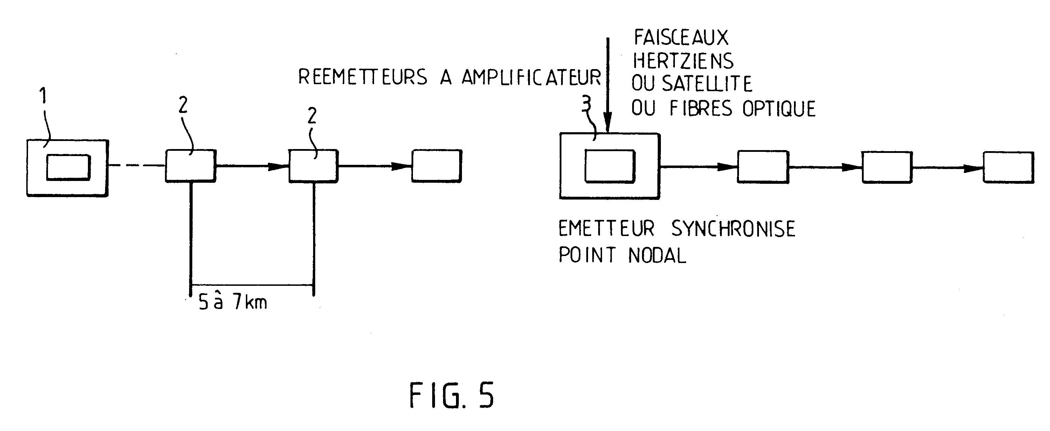

Selon la figure 5, le système de radiodiffusion selon l'invention comporte une station émettrice, ou station mère 1, principale, directionnelle, placée à l'origine d'un axe autoroutier.

Cet émetteur principal émet approximativement dans l'axe de l'auto route concerné.

A partir de cet émetteur, à peu près tous les cinq à 10 kilomètres, sont disposés des émetteurs secondaires, ou réémetteurs, synchronisés 2, ayant notamment une émission directionnelle de puissance réduite.

Chaque émetteur secondaire est équipé d'une antenne de réception pour recevoir l'émission de l'émetteur situé immédiatement avant lui, d'un amplificateur et d'une antenne de réémission dirigée approximativement dans la direction prise par l'autoroute à partir de son point d'installation.

A 50 Km environ de l'émetteur principal se trouve un point nodal, constitué par des stations mères intermédiaires 3 reliées à la station mère principale par faisceau Hertzien, par fibre optique, par satellite ou par tout autre moyen connu.

Ce point nodal 3 permet de ne pas interrompre la chaîne lorsque l'un des émetteurs secondaires 2 tombe en panne. Les points nodaux 3 sont répartis sur toute la longueur de l'auto route environ tous les 50 Km, c'est-à-dire après 5 ou 6 émetteurs secondaires. Ces intervalles de 10 Km et 50 Km peuvent être modifiés, c'est-à-dire réduits ou allongés selon le relief et les conditions locales.

Afin de réduire la zone perturbée, due à l'interférence de deux réémetteurs successifs, à quelques mètres (voir Fig. 2), les réémetteurs isofréquence comportent des antennes spéciales dont le rapport de rayonnement avant/arrière est très élevé (environ 60 dB). Comptetenu de l'écart entre les réémetteurs dans le présent exemple de réalisation, cette zone est perturbée réduite à une dizaine de mètres comme le montre la figure 2.

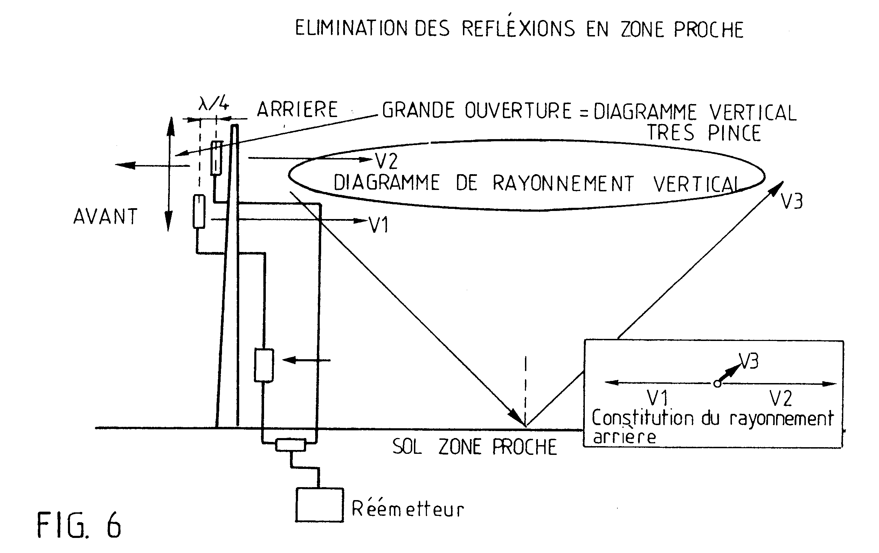

Les antennes de réception et de réémission des réémetteurs 2 sont constituées chacune de deux demi-antennes espacées entre elles, horizontalement d'une distance égale à λ/4. L'"ouverture", c'est-à-dire la hauteur de ce groupement d'antennes d'émission est de plusieurs fois le longueur d'onde afin de pincer le diagramme vertical pour limiter au maximum les réflexions dans la zone proche, réflexions qui viendraient gêner la constitution d'un rapport avant/arrière élevé (voir fig. 6).

D'autre part, les phases d'alimentation de chaque demi-antenne sont décalées avec un retard de λ/4 de l'une par rapport à l'autre, de sorte que les champs émis par ces deux demi-antenne s'ajoutent dans la direction du tir, et se soustraient dans la direction opposée pour s'annuler. Cela permet d'avoir un rapport avant/arrière supérieur à 40 dB et même de 60 dB, et de réduire la zone de perturbations à quelques mètres.

Le champ en provenance de l'émetteur suivant est donc en pratique au moins inférieur de 60 dB à celui engendré dans la direction du tir, ce qui fait que la zone d'égalité de champ qui est au voisinage exclusif dudit émetteur est très courte (quelques mètres).

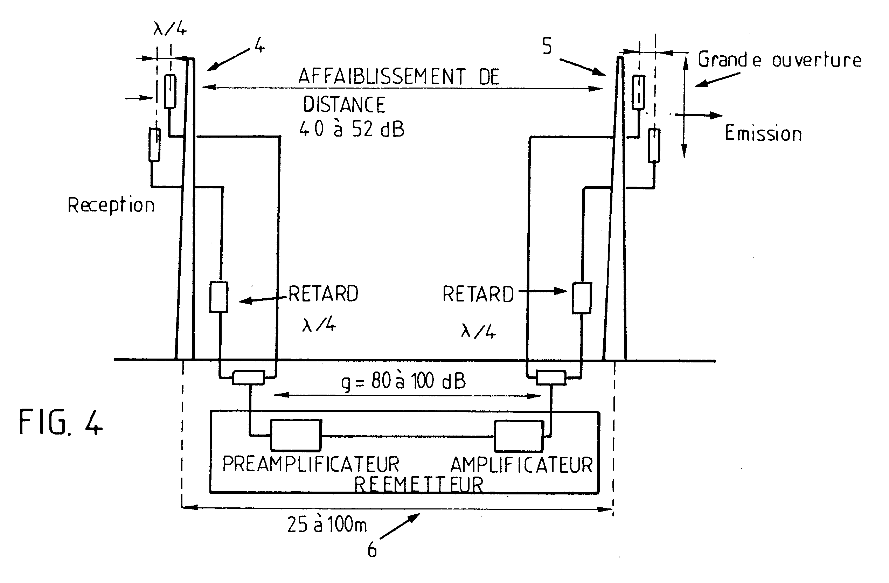

La figure 4 montre très schématiquement le principe d'un réémetteur intermédiaire.

Chaque réémetteur ou station intermédiaire 2 comporte, comme le montre la figure 4, une antenne de réception 4 constituée comme décrit précédemment, dont le gain G1 est de 6, soit 8 dB, montée sur un mât de 10 m, une antenne d'émission 5 constituée de façon identique à la précédente et ayant un gain de 40, soit 16 dB montée sur un mât de 14 m.

L'affaiblissement de distance B (en dB) qui est égal à 20 Log 4 π D/λ (où D est la distance en mètre entre antenne) ajouté au rapport avant/arrière A (en dB) de chacune des antennes donne le découplage entrée/sortie R. Ce découplage doit être supérieur au gain de l'amplificateur. C'est le cas des réémetteurs utilisés ici.

Le réémetteur proprement dit 6, a une puissance de 2,5 W. Cette puissance peut se situer entre 1 et 100 W pour garantir un bon confort d'écoute et sans provoquer de problèmes de couplage entrée/sortie insurmontables.

Cette puissance à la sortie du réémetteur conduit à une PAR (puissance apparante rayonnée) égale au produit du gain en puissance de l'antenne d'émission par la puissance du réémetteur ce qui fait une PAR de 100 W avec un gain en puissance de 10 (16 dB).

Les deux antennes sont dirigées dans des directions opposées.

Les dispositions déjà prises permettent une portée relativement importante en ce qui concerne la limitation de la zone perturbée. De ce fait, on utilise des amplificateurs à gains élevés.

Pour une dizaine de Watts à l'entrée des antennes d'émission, ce qui permettra une portée d'une dizaine de Km avec un gain des antennes de l'ordre de 15 dB, le gain nécessaire peut atteindre 80̸ à 10̸0̸ dB, compte tenu de la marge pour le bon fonctionnement d'une commande automatique du gain. Il faut donc que le découplage entre entrée et sortie dépasse largement cette valeur pour que la réaction positive subsistante soit sans effet sur le fonctionnement du système.

Le découplage est obtenu en séparant les antennes d'émission de celles de réception de quelques dizaines de mètres et en utilisant également un groupement d'antennes de réception similaire à celui d'émission ; ces deux antennes "tirant" sur une autoroute dans des directions quasi opposées (voir Fig. 4), un découplage de plus de 150̸ dB a été obtenu expérimentalement.

Il y a toutefois lieu de noter que même avec des angles différents de 180̸° entre antenne d'émission et antenne de réception une atténuation importante peut être obtenue avec la configuration utilisée.

On peut également envisager un embranchement dans la chaine. Par exemple, on peut prévoir à un point nodal, le départ de deux ou plusieurs chaînes de réémetteurs secondaires dans des directions d'autoroute différentes.

Il va de soi que l'invention n'est pas limitée à l'exemple décrit mais peut être appliquée à d'autres usages, pour des émetteurs commerciaux ou non, où une fréquence unique serait nécessaire ou souhaitée.

## Revendications

1. Dispositif de retransmission d'une émission de radiodiffusion à partir d'une émission de même fréquence reçue par le dispositif, caractérisé en ce qu'il est constitué d'un réémetteur (6) constitué d'un amplificateur et d'un groupement d'antennes directionnelles de réception (4), et d'un groupement d'antennes directionnelles d'émission (5), que les groupements d'antennes sont constitués chacun de deux demi-antennes espacées entre elles horizontalement d'une distance égale à λ/4, que la hauteur du groupement d'antennes d'émission est un multiple de la longueur d'onde, et qu'il est réglé sur une puissance d'émission comprise entre 1 et 100 W, afin de retransmettre l'émission reçue sans perturbations.

2. Dispositif selon la revendication 1, caractérisé en ce que chaque groupement d'antennes à un rapport avant/arrière de 40 à 60 dB.

3. Dispositif selon la revendication 1, caractérisé en ce que la hauteur du groupement d' antennes d'émission est de plusieurs fois la longueur d'ondes afin de pincer le diagramme de rayonnement vertical et limiter les réflexions au sol dans la zone proche.

4. Dispositif selon la revendication 1, caractérisé en ce que la syntonie est assurée par des filtres à plusieurs pôles à haut coefficient de surtension et à déphasage minimal placés à l'entrée et à la sortie de l'amplificateur.

5. Dispositif selon la revendication 4, caractérisé en ce que les filtres sont d'une sélectivité suffisante pour éliminer les canaux distants de plus de 1 MHz de la fréquence désirée, les émissions trop proches du canal utilisé étant éliminées grâce aux antennes permettant d'obtenir des zones d'amplitude nulle dans la direction de ces émissions.

6. Système de radiodiffusion isofréquence destiné à permettre la réception d'une station au moyen d'un récepteur situé à bord d'un véhicule, se déplaçant sur une longue distance, notamment sur un trajet autoroutier, dans lequel on dispose, le long du trajet, après un émetteur principal ou station mère, des réémetteurs à amplificateurs placés entre antennes d'émission et de réception, et calés sur la même fréquence, lesdites antennes des réémetteurs étant directionnelles et les antennes de deux réémetteurs consécutifs étant dirigées approximativement dans la même direction caractérisé en ce que les antennes sont constituées par des groupements directionnels d'antennes élémentaires (4, 5) décalées dans l'espace de λ/4 et que ces groupements sont alimentés au moyen d'un même signal avec un déphasage de λ/4 d'une antenne par rapport à l'autre de telle façon que les champs émis s'ajoutent dans la direction de l'émission et se soustraient pour s'annuler dans la direction opposée, et que le retard du signal dans chaque réémetteur a une valeur < 5µs.

7. Système selon la revendication 6, caractérisé en ce que les réémetteurs sont disposés environ tous les 7 Km.

8. Système selon la revendication 6, caractérisé en ce que des points nodaux constitués par des émetteurs ou stations mères intermédiaires sont disposés le long du trajet entre deux séries de réémetteurs afin de garantir le fonctionnement du reste de la chaîne lorsque l'un des réémetteurs d'une série cesse de fonctionner, ces points nodaux étant alimentés par faisceau Hertzien satellite, câble de fibres optiques ou tout autre moyen de transmission à partir d'une station mère principale.

9. Système selon la revendication 8, caractérisé en ce qu'on dispose un point nodal environ tous les 50 Km.

## Claims

1. Device for retransmitting a radio broadcast transmission based on a transmission of the same frequency received by the device, wherein the said device is composed of a transposer (6), which comprises an amplifier and a grouping of reception shaped-beam antennae (4), and a grouping of transmission shaped-beam antennae (5), and the groupings of antennae are each made up of two half-antennae with a horizontal space between them which is equal to λ/4, and the height of the grouping of transmission antennae is a multiple of the wavelength and these antennae are adjusted to a transmission power between 1 and 100 W, in order to rebroadcast the transmission received without perturbations.

2. Device in accordance with claim 1, wherein each grouping of antennae has a front/back ratio of 40 to 60 dB.

3. Device in accordance with claim 1, wherein the height of the grouping of transmission antennae is several times the wavelength in order to squeeze the vertical radiation pattern and limit reflections to the ground in the surrounding area.

4. Device in accordance with claim 1, wherein the antenna tuning is effected by filters, with several poles with a high circuit magnification and having minimal phase shift, which are positioned at the input and the output of the amplifier.

5. Device in accordance with claim 4, wherein the filters have sufficient discrimination to cut out broadcasts at frequencies of more than 1 MHz from the desired frequency, the transmissions which are too close to the frequency used being eliminated by antennae which enable zones of zero amplitude in the direction of these broadcasts.

6. Isofrequency radio broadcasting system aimed at enabling reception of a station by means of a receiver located on board a vehicle which is moving a long distance, in particular along a motorway system, in which transposers with amplifiers, Positioned between transmitting and receiving antennae and fixed to the same frequency, after a main station or parent station, are disposed along the route, the said transposer antennae being shaped-beam ones and the antennae of two consecutive transposers being approximately directed in the same direction, wherein the antennae are composed of directional groupings of basic antennae (4, 5) separated from each other by a distance of λ/4 and these groupings are fed by means of the same signal with a phase shift of λ/4 from one antenna to the other such that the transmitted fields reinforce each other in the direction of the transmission and cancel each other out in the opposite direction, and the time lag of the signal in each transposer has a value < 5 µs.

7. System in accordance with claim 6, wherein the transposers are disposed approximately every 7 km.

8. System in accordance with claim 6, wherein the nodal points made up of interposed transmitters or parent stations disposed along the route between two series of transposers, in order to ensure the functioning of the rest of the chain when one of the transposers of a series stops functioning, these nodal points being fed by directional radio link, satellite, fibre-optics cable or any other means of transmission from a main parent station.

9. System in accordance with claim 8, wherein a nodal point is disposed approximately every 50 km.

## Patentansprüche

1. Vorrichtung zum Übertragen einer Rundfunksendung auf der Grundlage einer durch die Vorrichtung empfangenen Sendung derselben Frequenz, dadurch gekennzeichnet, daß ein Nebensender (6) vorgesehen ist, der einen Verstärker, eine Gruppierung von Empfangsantennen mit besonderer Richtcharakteristik (4), und eine Gruppierung von Sendeantennen mit besonderer Richtcharakeristik (5) aufweist, wobei die Gruppierungen von Antennen jeweils aus zwei in waagerechter Richtung durch einen λ/4 betragenden Abstand getrennten Halbantennen aufgebaut sind, die Höhe der Gruppierung von Sendeantennen ein Vielfaches der Wellenlänge beträgt, und wobei die Vorrichtung auf eine im Bereich von 1 bis 100 W liegende Sendeleistung geregelt wird, um die empfangene Sendung störungsfrei zu übertragen.

2. Vorrichtung nach Anspruch 1, dadurch gekennzeichnet, daß jede Gruppierung von Antennen ein vorher/nachher-Verhältnis von 40 bis 60 dB aufweist.

3. Vorrichtung nach Anspruch 1, dadurch gekennzeichnet, daß die Höhe der Gruppierung von Sendeantennen ein Mehrfaches der Wellenlänge beträgt, um die vertikale Abstrahlcharakteristik einzuengen und die Bodenreflexionen im Nahbereich zu begrenzen.

4. Vorrichtung nach Anspruch 1, dadurch gekennzeichnet, daß die Frequenzabstimmung durch mehrpolige, am Eingang und am Ausgang des Verstärkers angeordnete Filter mit hohem Überspannungsverhältnis und kleinstmöglichem Phasenfehler gewährleistet wird.

5. Vorrichtung nach Anspruch 4, dadurch gekennzeichnet, daß die Filter eine ausreichende Trennschärfe aufweisen, um die Kanäle zu unterdrücken, die einen Abstand von mehr als 1 MHz von der gewünschten Frequenz haben, und die zu nahe am benutzten Kanal liegenden Sendungen dank der Antennen unterdrückt werden, die in der Richtung dieser Sendungen Bereiche mit Nullamplitude ermöglichen.

6. System für Gleichfrequenzfunk zum Ermöglichen des Empfangs einer Station mittels eines Empfängers, der sich an Bord eines Fahrzeugs befindet, welches sich über eine weite Entfernung fortbewegt, vorzugsweise auf Autobahnen, entlang denen einem Hauptsender oder einer Mutterstation nachgeschaltet und zwischen Empfangs- und Sendeantennen angeordnet verstärkende, auf dieselbe Frequenz eingestellte Nebensender angeordnet sind, wobei die Antennen der Nebensender eine Richtcharakteristik aufweisen und die Antennen zweier aufeinanderfolgender Nebensender annähernd auf dieselbe Richtung ausgerichtet sind, dadurch gekennzeichnet, daS die Antennen aus Richtcharakteristiken aufweisenden Gruppierungen von räumlich um λ/4 versetzten Elementarantennen (4, 5) aufgebaut sind, die Gruppierungen mittels desselben, eine Phasenverschiebung von λ/4 von einer Antenne zur bezogenen anderen aufweisenden Signals derart gespeist werden, daß sich die abgestrahlten Felder in der Ausbreitungsrichtung addieren und sich in der entgegengesetzten Richtung zur gegenseitigen Auslöschung subtrahieren, und die Signalverzögerung in jedem Nebensender einen Wert kleiner als 5µs beträgt.

7. System nach Anspruch 6, dadurch gekennzeichnet, daß die Nebensender durchschnittlich alle 7 km angeordnet sind.

8. System nach Anspruch 6, dadurch gekennzeichnet, daß zwischen zwei Sätzen von Nebensendern entlang der Wegstrecke durch Nebensender oder dazwischenliegende Mutterstationen gebildete Knotenpunkte angeordnet sind, um im Falle eines Ausfalls eines der Nebensender eines Satzes die Funktionsfähigkeit der verbleibenden Kette zu garantieren, wobei die Knotenpunkte ausgehend von einer übergeordneten Mutterstation mittels Richtfunk, Satellit, Lichtwellenleiterkabel oder beliebiger anderer Übertragungseinrichtungen gespeist werden.

9. System nach Anspruch 8, dadurch gekennzeichnet, daß ein Knotenpunkt durchschnittlich alle 50 km angeordnet wird.
